## Europäisches Patentamt

## European Patent Office

## Office européen des brevets

(19)

(11) Veröffentlichungsnummer: **0 045 071**
A1

(12)

# EUROPÄISCHE PATENTANMELDUNG

(21) Anmeldenummer: **81105871.8**

(22) Anmeldetag: **24.07.81**

(51) Int. Cl.³: **B 60 P 1/04,** B 62 D 55/00

(30) Priorität: **25.07.80 DE 3028346**

(43) Veröffentlichungstag der Anmeldung: **03.02.82**
**Patentblatt 82/5**

(84) Benannte Vertragsstaaten: **AT CH DE FR LI**

(71) Anmelder: **Plereiter, Josef, Unterau 27, D-8221 Inzel (DE)**

(72) Erfinder: **Plereiter, Josef, Unterau 27, D-8221 Inzel (DE)**

(74) Vertreter: **Bauer, Robert, Dipl.-Ing.,**
**Thomas-Wimmer-Ring 14, D-8000 München 22 (DE)**

(54) **Kipperfahrzeug mit Raupenfahrwerk.**

(57) Bei diesem Fahrzeug verlaufen die unteren (16) wie die oberen Trume (18) der Raupenketten (14) im wesentlichen geradlinig zwischen den an den Enden des Fahrwerks (2) angeordneten Kettenantriebs- und Kettenumlenkrädern (6 bzw. 8), und die Lademulde (30) überragt die oberen Kettentrume (18) seitlich in geringem Abstand.

Zumindest eine freiliegende, vorzugsweise die kippseitige Bordwand (42) der Lademulde, die geneigt sein kann, soll eine Höhe von 90 cm über Bodenniveau nicht überschreiten. Damit kann das Fahrzeug von auf gleichem Niveau stehenden normalen Kipper-Lastkraftwagen beladen werden. Handelt es sich um die stirnseitige Bordwand, so soll die Breite der Lademulde (30) in etwa der maximalen für den Strassenverkehr zulässigen Fahrzeugbreite entsprechen.

## Kipperfahrzeug mit Raupenfahrwerk

Die Erfindung bezieht sich auf ein Kipperfahrzeug mit Raupenfahrwerk und oberseitig offener Lademulde.

Derartige Kipperfahrzeuge finden Verwendung in schwierigem Gelände für den Transport von Erde, Steinen und dergl. beispielsweise auf Großbaustellen, in Steinbrüchen oder im Erz- oder Braunkohletagebau.

Es ist ein Kipperfahrzeug gemäß dem Oberbegriff des Patentanspruchs 1 bekannt (deutsches Gebrauchsmuster Nr. 1 931 417), bei dem sich die Lademulde auf einer Art Panzerfahrwerk mit im wesentlichen trapezförmiger Kettenführung in dementsprechend beträchtlicher Höhe über dem Boden befindet. Darüberhinaus sind für Baustellen radangetriebene Kipperfahrzeuge, sogenannte "Japaner", bekannt und gebräuchlich, bei denen die Räder, um auch geländeübliche Hindernisse überwinden zu können, eine beträchtliche Größe besitzen, die gleichfalls eine entsprechend hohe Anordnung der Lademulde erforderlich macht.

In beiden Fällen ist wegen der Höhe der Lademulde bzw. deren Bordwänden ein Beladen seitens eines Lastkraftwagens ohne Verwendung besonderer Ladevorrichtungen nur durch Kippen auf Seiten

- 2 -

0045071

des Lastkraftwagens nicht möglich.

Hier will die Erfindung Abhilfe schaffen. Die Erfindung, wie sie in den Ansprüchen gekennzeichnet ist, löst die Aufgabe, ein geländegängiges Kipperfahrzeug für den Baustellenverkehr so auszubilden, daß es unmittelbar seitens eines Kipper-Lastkraftwagens beladen werden kann, selbst wenn es auf gleichem oder zumindest etwa gleichem Niveau steht wie dieser.

Die von Baggerfahrwerken an sich bekannte Kettenführung, bei der die Kettenantriebs- und -umlenkräder selbst eine tragende Funktion besitzen, bringt den Vorteil mit sich, daß die Lademulde hinreichend tief angeordnet werden kann, um sie unmittelbar durch Schütten aus einem Kipper-Lastkraftwagen befüllen zu können. Dessen ungeachtet kommen die wesentlichen Vorteile eines Kettenfahrzeugs hinsichtlich Geländegängigkeit zum Tragen.

Im Folgenden wird die Erfindung anhand einer lediglich ein Ausführungsbeispiel darstellenden Zeichnung näher erläutert. Dabei zeigt

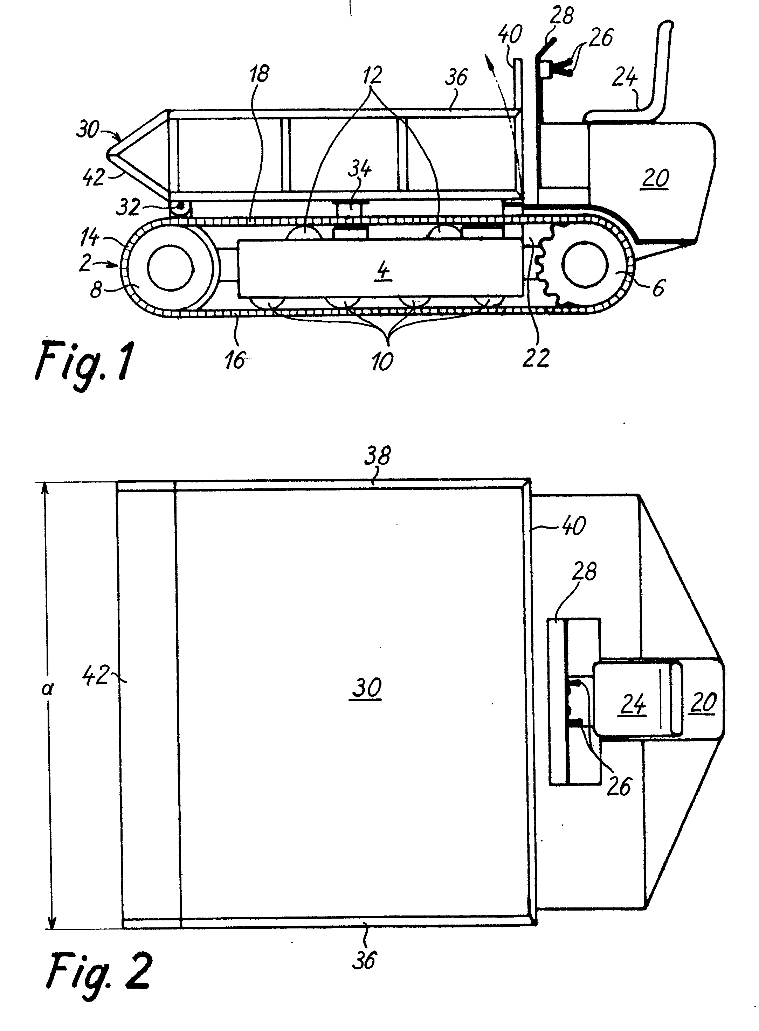

Figur 1 eine schematisierte Seitenansicht des betreffenden Kipperfahrzeugs und

Figur 2 eine Draufsicht auf dasselbe.

Das dargestellte Fahrzeug besitzt ein Raupenfahrwerk 2 im wesentlichen bestehend aus einem kastenförmigen Rahmen 4 mit beidseitig daran bzw. darin angeordneten Kettenantriebsrädern 6, Kettenumlenkrädern 8, Stützrädern 10, Kettenführungsrädern 12 sowie über diese Räder laufenden endlosen Raupenketten 14, wie dies von Baggerfahrwerken her bekannt ist. Dabei verlaufen die unteren wie die oberen Kettentrume 16 bzw. 18 zwischen den Rädern 6 und 8 im wesentlichen geradlinig.

Auf einem Stirnende des Rahmens 4 befindet sich innerhalb einer kastenförmigen Abdeckung 20 der Antriebsmotor des gesamten Fahrzeugs in Gestalt eines Dieselmotors, der eine Hydraulikpumpe treibt. Diese Hydraulikpumpe speist sowohl die Kipphydraulik als auch einen Hydraulikmotor 22 für die Kettenantriebsräder 6, womit die bei hydraulischen Fahrantrieben bekannten Vorteile erreicht werden.

Auf der Abdeckung 20 ist der Führersitz 24 montiert derart, daß der Führer den wesentlichen Teil des Fahrzeugs überblickt. Zu diesem Zweck sind die Bedienungselemente, wie z.B. die Fahrsteuerhebel 26, auf einer Konsole 28 in ausreichendem Abstand innerhalb von der Abdeckung 20 auf dem Rahmen 4 angeordnet.

Vor der Konsole 28, den wesentlichen Teil des Rahmens 4 überdeckend, befindet sich die Lademulde 30 in geringem Abstand über dem oberen Trum 18 der Ketten 14. Sie ist mittels eines Scharniers 32 mit querverlaufender Achse am dem Führersitz 24 abgewandten Ende auf dem Rahmen 4

0045071

gelagert und stützt sich etwa in ihrer Mitte in bei Kippeinrichtungen gewohnter Weise auf einer schwenkbar in dem Rahmen 4 gelagerten teleskopartigen Kolben-Zylinder-Einheit 34 ab.

Die Lademulde 30 besitzt drei im wesentlichen senkrechte starre Bordwände 36, 38 und 40, von denen die der Konsole 28 benachbarte stirnseitige Bordwand 40 die beiden seitlichen Bordwände 36 und 38 überragt. Die vierte, am Scharnierende der Lademulde 30 befindliche Bordwand, 42, ist ebenfalls starr, jedoch nach außen geneigt, wodurch ihre Oberkante tiefer liegt als die Oberkante des wesentlichen Teiles der beiden seitlichen Bordwände 36 und 38, nämlich vorzugsweise nur etwa 80 cm über dem Boden bei ungekippter Lademulde. Die Breite a der Lademulde entspricht in etwa der maximalen für Straßenfahrzeuge zugelassenen Breite.

Hierdurch kann die Lademulde stirnseitig von praktisch jedem Lastkraftwagen mit Kippeinrichtung unmittelbar befüllt werden, um Materialien, wie z.B. Kies, Teerkies oder Beton, auf einer Baustelle abzusetzen. Bei allenfalls geringem Niveauunterschied der beiden Fahrzeuge, wie er etwa durch Bohlen herstellbar ist, kommt auch eine seitliche Befüllung auf gleiche Weise in Betracht.

Patentansprüche

1. Kipperfahrzeug mit Raupenfahrwerk und oberseitig offener Lademulde, bei dem die oberen Trume der Raupenketten zwischen den an den Enden des Fahrwerks angeordneten Kettenantriebs- und Kettenumlenkrädern im wesentlichen geradlinig verlaufen und die Lademulde diese oberen Kettentrume in geringem Abstand seitlich überragt, dadurch gekennzeichnet, daß auch die unteren Kettentrume (16) in bei Baggerfahrwerken an sich bekannter Weise zwischen den Kettenantriebsrädern (6) und den Kettenumlenkrädern (8) im wesentlichen geradlinig verlaufen.

2. Kipperfahrzeug nach Anspruch 1, dadurch gekennzeichnet, daß zumindest eine freiliegende Bordwand (42) der Lademulde (30) eine Höhe von 90 cm, vorzugsweise eine solche von etwa 80 cm, über Bodenniveau nicht überschreitet.

3. Kipperfahrzeug nach Anspruch 2, dadurch gekennzeichnet, daß die betreffende Bordwand (42) die kippseitige Bordwand in Gestalt einer starren, nach außen geneigten Bordwand ist.

4. Kipperfahrzeug nach Anspruch 2 oder 3, dadurch gekennzeichnet, daß die betreffende Bordwand (42) eine stirnseitige Bordwand ist und die Breite (a) der Lademulde (30) in etwa der maximalen für den Straßenverkehr zulässigen Fahrzeugbreite entspricht.

*Fig. 1*

*Fig. 2*

| Kategorie | Kennzeichnung des Dokuments mit Angabe, soweit erforderlich, der maßgeblichen Teile | betrifft Anspruch |
|---|---|---|
| | DE - B - 1 948 062 (RATRAC) <br> * Fig. 1, 2 * <br> -- | 1,3,4 |
| | US - A - 1 920 661 (OSMAN) <br> * Fig. 1 * <br> -- | 1,3,4 |
| | US - A - 1 834 211 (HUMPHREYS et al.) <br> * Fig. 1, 2, 5 * <br> -- | 1,3,4 |
| D | DE - U - 1 931 417 (HUNGER) <br> ---- | |

**EINSCHLÄGIGE DOKUMENTE**

**KLASSIFIKATION DER ANMELDUNG (Int. Cl.³)**

B 60 P    1/04

B 62 D   55/00

**RECHERCHIERTE SACHGEBIETE (Int. Cl.³)**

B 60 P    1/00

B 62 D   55/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. | |
|---|---|---|

| Recherchenort | Abschlußdatum der Recherche | Prüfer |
|---|---|---|
| Berlin | 22-10-1981 | LUDWIG |

EPA form 1503.1   06.78